(19) Europäisches Patentamt
European Patent Office
Office européen des brevets

(11) EP 1 447 432 A1

(12) EUROPEAN PATENT APPLICATION

(43) Date of publication:
**18.08.2004 Bulletin 2004/34**

(51) Int Cl.[7]: **C09D 133/00**, C09D 4/06

(21) Application number: **04250639.4**

(22) Date of filing: **06.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.02.2003 US 447176 P**

(71) Applicant: **ROHM AND HAAS COMPANY**
**Philadelphia, Pennsylvania 19106-2399 (US)**

(72) Inventors:
- **Ziemann, Otto Carl**
**North Wales Pennsylvania 19454 (US)**
- **Marks, Allen Phillip**
**Richboro Pennsylvania 18954 (US)**
- **Gebhard, Matthew Stewart**
**New Britain Pennsylvania 18901 (US)**

(74) Representative: **Kent, Venetia Katherine et al**
**Rohm and Haas (UK) Ltd.,**
**European Patent Department,**
**28th Floor,**
**City Point,**
**One Ropemaker Street**
**London EC2Y 9HS (GB)**

(54) **Aqueous composition and method of preparing nonyellowing coating therefrom**

(57) An aqueous composition containing at least one unsaturated fatty acid ester and polymer having pendant crosslinking groups is provided. The aqueous composition contains less than 5 weight % volatile organic compounds, based on the weight of the aqueous composition. A method is provided for preparing a nonyellowing dry crosslinked coating. The aqueous composition is useful for preparing crosslinked coatings, suitable in coating applications such as architectural or maintenance paints.

EP 1 447 432 A1

## Description

This invention generally relates to an aqueous composition containing polymer having pendant crosslinking groups, and select unsaturated fatty acid esters. The aqueous composition is substantially free of volatile organic compounds. Further, the aqueous composition is useful for preparing dried crosslinked coatings having a combination of good film formation properties, suitable film properties such as hardness or block resistance, and have nonyellowing appearances. The invention also relates to a method of preparing a nonyellowing crosslinked coating.

Coating compositions, such as latex paints, contain binder polymer particles dispersed in an aqueous medium. Upon drying, the binder polymer particles undergo a film formation process in which the binder polymer particles coalesce to form a polymeric film. However, many binder polymer particles are not film forming at ambient temperatures, such as temperatures in the range of 5 °C to 40 °C. Typically, coalescents are incorporated into these coating compositions to aid in the film formation process of the binder polymer particles at ambient temperatures. Examples of common coalescents include ethylene glycol monoalkyl ethers, esters, diesters, diethylene glycol monoalkyl ethers, and propylene glycol monoalkyl aromatic ethers. After film formation, coalescents gradually evaporate from the dried paint films to leave coatings having the required physical properties, such as hardness, solvent resistance, or water resistance.

The release of volatile organic compounds (VOCs) into the atmosphere is associated with the formation of tropospheric ozone, particularly in urban areas. Sources of VOCs include coalescents, cosolvents, or other organic compounds that have evaporated from drying or dried paint films. Coating compositions that are substantially free of VOCs are desired, in particular, coating compositions that have a zero level of VOCs. However, the removal of coalescents from coating compositions adversely affects the film formation properties of the binder polymer particles and the properties of the resulting dry film.

One method to improve the properties of dry films formed from coating compositions containing binder polymer particles is crosslinking the coalesced polymeric film. U.S. Patent Number 5,484,849 discloses an air curing polymer composition which contains acetoacetate functional polymer and an autoxidizable material. The autoxidizable material provides a source of free radicals to cure and crosslink the acetoacetate functionality upon exposure to oxygen. The disclosed composition provides crosslinked films with improved properties such as solvent resistance. Various suitable autoxidizable materials are disclosed including drying oils, drying oil fatty acids, simple esters of drying oil fatty acids, sorbic acid, sorbic esters, allyl ethers, polyallyl ethers, and sterically hindered aldehydes or polyaldehydes. In Example 1H of this reference, a film was prepared from a composition including a latex containing polymer having acetoacetoxy groups, and ethyl linoleate as the autoxidizable material. The composition of Example 1H also contained VOCs such as propylene glycol with a normal boiling point of 187 °C and diisopropyladipate with a normal boiling point of less than 290 °C. The level of VOCs in the composition of Example 1H was 7.6 weight %, based on the total weight of the composition.

Desired are compositions having low levels of VOCs that are suitable for preparing crosslinked films useful in coating compositions such as interior or exterior paints. It is also desired that these compositions provide films that do not undergo yellowing upon extended exposure to environmental conditions, in particular, exterior conditions.

The inventors have surprisingly discovered an aqueous composition containing a combination of select unsaturated fatty acid esters and polymer having select crosslinking groups that is suitable for providing a dried crosslinked film with a nonyellowing appearance. This aqueous composition has a low content of VOCs, including zero VOC.

According to the first aspect of the present invention, an aqueous composition is provided containing polymer having pendant crosslinking groups, and one or more unsaturated fatty acid esters; wherein the unsaturated fatty acid esters have an average iodine number of at least 50; wherein the unsaturated fatty acid esters include less than 10 weight % triethylenically unsaturated fatty acid ester based on the weight of the unsaturated fatty acid esters; and wherein the aqueous composition includes less than 5 weight % volatile organic compounds based on the weight of the aqueous composition.

A second aspect of the present invention provides a method of preparing a nonyellowing crosslinked coating, including the steps of applying an aqueous composition onto a substrate, wherein the aqueous composition contains polymer having pendant crosslinking groups, and one or more unsaturated fatty acid esters, wherein the unsaturated fatty acid esters have an average iodine number of at least 50, wherein the unsaturated fatty acid esters include less than 10 weight % triethylenically unsaturated fatty acid ester based on the weight of the unsaturated fatty acid esters, and wherein the aqueous composition include less than 5 weight % volatile organic compounds based on the weight of the aqueous composition; drying or allowing to dry the aqueous composition applied to the substrate to prepare a dry coating; and crosslinking or allowing to crosslink the dry coating in the presence of oxygen to provide the nonyellowing crosslinked coating.

As used herein, the use of the term "(meth)" followed by another term such as acrylate refers to both acrylates and methacrylates. For example, the term "(meth)acrylate" refers to either acrylate or methacrylate; the term "(meth) acrylic" refers to either acrylic or methacrylic; and the term "(meth)acrylamide" refers to either acrylamide or methacrylamide.

"Glass transition temperature" or "$T_g$" as used herein, means the temperature at or above which a glassy polymer will undergo segmental motion of the polymer chain. Glass transition temperatures of a polymer can be estimated by the Fox equation *[Bulletin of the American Physical Society* 1, 3 Page 123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers in Kelvin. For polymers containing three or more monomers, additional terms are added ($w_n/T_{g(n)}$). The $T_g$ of a polymer phase can also be calculated by using the appropriate values for the glass transition temperatures of homopolymers, which may be found, for example, in "Polymer Handbook", edited by J. Brandrup and E. H. Immergut, Interscience Publishers. The values of $T_g$ reported herein are calculated using the Fox equation.

As used herein, the term "dispersion" refers to a physical state of matter that includes at least two distinct phases, wherein a first phase is distributed in a second phase, with the second phase being a continuous medium.

The term "pendant" is used in the specification to mean "attached to the polymer backbone and available for further reaction." The term "pendant" also includes attachment of such groups at the termini of a polymer chain.

The aqueous composition of the present invention includes a polymer having pendant crosslinking groups and select unsaturated fatty acid esters. The aqueous composition is further characterized as being substantially free of volatile organic compounds.

The polymer contained in the aqueous composition of this invention has crosslinking groups pendant to the backbone of the polymer. In a dry coating prepared from the aqueous composition, the crosslinking groups undergo reaction to form chemical bonds between polymer chains or with the unsaturated fatty acid esters, leading to increases in properties of the dry coating, such as block resistance, solvent resistance, or hardness.

Examples of suitable crosslinking groups include groups containing one or more vinyl moieties such as (meth) acryloxy groups, allyl groups, and diene groups; groups containing aldehyde or ketone moieties such as acetoacetoxy groups and cyanoacetoxy groups; primary amine groups; urea groups such as ethyleneureido groups; thiourea groups; imidazoline groups; and oxazolidine groups.

Acetoacetoxy groups are represented by:

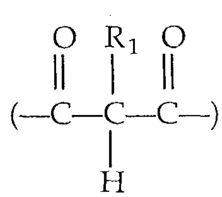

wherein $R_1$ is hydrogen, alkyl, or phenyl. Cyanoacetoxy groups are represented by:

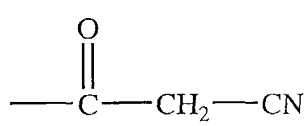

Ureido groups are represented by:

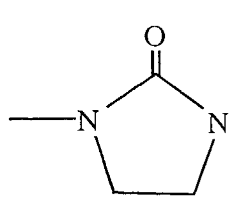

Vinyl groups are represented by:

$$-CH_2=CH_2-$$

and include, for example, 1-alkenyl groups such as allyl groups and diene groups.
(Meth)acryloxy groups are represented by:

$$-O-C(O)-CH(R)=CH_2$$

wherein R is either H or $CH_3$.
In one embodiment, the polymer is an addition polymer formed by the polymerization of ethylenically unsaturated monomers. Generally, the addition polymer having the pendant crosslinking groups is formed by the polymerization of at least one ethylenically unsaturated monomer containing a crosslinking group, referred to herein as "crosslinking monomer" and optionally, at least one ethylenically unsaturated second monomer, referred to herein as "second monomer".
Examples of crosslinking monomers include acetoacetyl functional monomers, which are monomers having an ethylenic unsaturation and one or more acetoacetyl moieties, and cyanoacetoxy functional monomers, which are monomers having an ethylenic unsaturation and one or more cyanoacetoxy groups. Acetoacetoxy functional monomers have the structure:

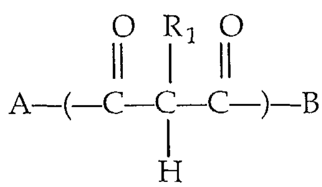

and cyanoacetoxy functional monomers have the structure:

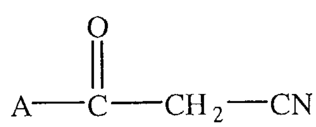

wherein $R_1$ is selected from H, alkyl having 1 to 10 carbon atoms, and phenyl; wherein A is either:

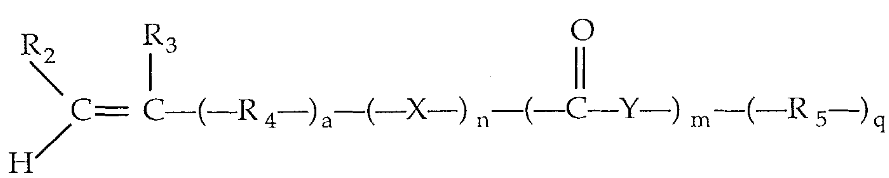

or

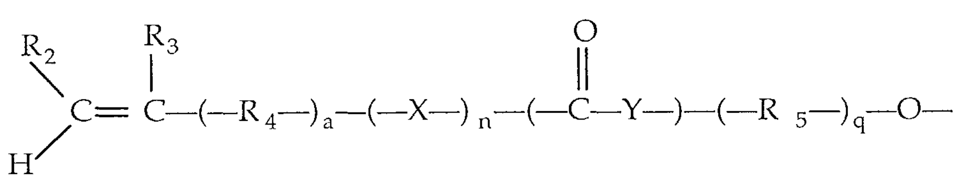

wherein $R_2$ is selected from H, alkyl having 1 to 10 carbon atoms, phenyl, halo, $CO_2$ $CH_3$, and CN; wherein $R_3$ is selected from H, alkyl having 1 to 10 carbon atoms, phenyl, and halo; wherein $R_4$ is selected from alkylene having 1 to 10 carbon atoms and phenylene; wherein $R_5$ is selected from alkylene having 1 to 10 carbon atoms and phenylene; wherein a, m, n, and q are independently selected from 0 and 1; wherein each of X and Y is selected from -NH- and -O-; and wherein B is selected from A, alkyl having 1 to 10 carbon atoms, phenyl, and heterocyclic groups.

The acetoacetyl functional monomers include, but are not limited to, acetoacetoxyethyl methacrylate ("AAEM"), acetoacetoxyethyl acrylate ("AAEA"), allyl acetoacetate, vinyl acetoacetate, vinyl acetoacetamide, acetoacetoxyethyl (meth)acrylamide, and combinations thereof. Preferred acetoacetyl functional monomers include acetoacetoxyethyl (meth)acrylate, acetoacetoxypropyl (meth)acrylate, allyl acetoacetate, acetoacetoxybutyl (meth)acrylate, 2,3-di(acetoacetoxy)propyl (meth)acrylate, and combinations thereof. Suitable cyanoacetoxy functional monomers include cyanoacetoxyethyl (meth)acrylate, cyanoacetoxypropyl (meth)acrylate, allyl cyanoacetate, and vinyl cyanoacetate.

Further examples of crosslinking monomers include urea functional monomers, which are monomers having an ethylenic unsaturation and one or more urea groups. Examples of urea functional monomers include, but are not limited to, hydrogen ethyleneureidoethyl itaconamide, ethyleneureidoethyl hydrogen itaconate, bis-ethyleneureidoethyl itaconate, ethyleneureidoethyl undecylenate, ethyleneureidoethyl undecylenamide, ethyleneureidoethyl (meth)acrylate, (meth)acrylamidoethyl-ethyleneurea, N-(ethylenethioureido-ethyl)-10-undecenamide, butyl ethyleneureido-ethyl fumarate, methyl ethyleneureido-ethyl fumarate, benzyl N-(ethyleneureido-ethyl) fumarate, benzyl N-(ethyleneureido-ethyl) maleamate, N-vinoxyethylethylene-urea, N-(ethyleneureidoethyl)-crotonamide, ureidopentyl vinyl ether, 2-ureidoethyl (meth)acrylate, (meth)acryloxyacetamido-ethylethyleneurea, N-(ethyleneureidoethyl)-4-pentenamide, N-((meth)acrylamidoethyl)-N-(1-hydroxymethyl)ethyleneurea, N-((meth)acrylamidoethyl)-N-(1-methoxy)methylethyleneurea, N-formamidoethyl-N-(1-vinyl)ethyleneurea, N-vinyl-N-(1-aminoethyl)-ethyleneurea, 2-(3-methylolimidazolidone-2-yl-1)ethyl acrylate, 2-ethyleneureido ethyl (meth)acrylate, 1-[2-(3-allyloxy-2-hydroxy-propylamino)ethyl]-imidazolidin-2-one, N-2-(allylcarbamoto)aminoethyl imidazolidinone, and 1-(2-((2-hydroxy-3-(2-propenyloxy)propyl)amino)ethyl)-2-imidazolidinone.

Other examples of crosslinking monomers include thiourea functional monomers, which are monomers having an ethylenic unsaturation and one or more thiourea groups. One example of a thiourea functional monomer is (meth) acrylamidoethylethylene thiourea.

Still other examples of crosslinking monomers include oxazolidine functional monomers, which are monomers having an ethylenic unsaturation and one or more oxazolidine groups. Examples of oxazolidine functional monomers include 2-(3-oxazolidinyl)ethyl (meth)acrylate and N-(2-vinoxyethyl)-2-methyloxazolidine.

Further examples of crosslinking monomers include oxazoline functional monomers, which are monomers having an ethylenic unsaturation and one or more oxazoline groups. One example of an oxazoline functional monomer is 4,4-dimethyl-2-isopropenyloxazoline.

Still further examples of crosslinking monomers include amine functional monomers, which are monomers having an ethylenic unsaturation and one or more amine groups. Examples of amine functional monomers include, but are not limited to, 2-vinoxyethylamine, 2-vinoxyethylethylene-diamine, 3-aminopropyl vinyl ether, 2-amino-2-methylpropyl vinyl ether, and 2-aminobutyl vinyl ether.

Crosslinking monomers containing vinyl groups as the crosslinking group include allyl (meth)acrylate, dicyclopentenyloxyethyl (meth)acrylate, and unsaturated fatty acid esters of (meth)acrylates, such as:

$$H_2C=C(R_1)-C(O)-O-R_2-X-C(O)-R_3$$

wherein $R_1$ is a hydrogen or methyl group; $R_2$ is a $C_2$ to $C_8$ linear or branched alkylene group; X is oxygen or nitrogen; and $R_3$ is a $C_8$ to $C_{30}$ hydrocarbon group having at least one carbon-carbon double bond. Examples of unsaturated fatty acid esters of (meth)acrylates includes esters derived from fatty oils such as corn oil, castor oil, cotton seed oil, linseed oil, olive oil, rapeseed oil, safflower oil, soybean oil, sunflower seed oil, and tung oil.

The second monomers include, for example, styrene; butadiene; $\alpha$-methyl styrene; vinyl toluene; vinyl naphthalene; ethylene; propylene; vinyl acetate; vinyl versatate; vinyl chloride; vinylidene chloride; (meth)acrylonitrile; (meth) acrylamide; various $C_1$-$C_{40}$ alkyl esters of (meth)acrylic acid, such as methyl (meth)acrylate, ethyl (meth)acrylate, n-butyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, lauryl (meth)acrylate, oleyl (meth)acrylate, palmityl (meth) acrylate, and stearyl (meth)acrylate; other (meth)acrylates such as isobornyl (meth)acrylate, benzyl (meth)acrylate, phenyl (meth)acrylate, and 2-bromoethyl (meth)acrylate; alkoxyalkyl (meth)acrylates, such as ethoxyethyl (meth)acrylate; mono-, di-, trialkyl esters of ethylenically unsaturated di- and tricarboxylic acids and anhydrides, such as ethyl maleate, dimethyl fumarate, and ethyl methyl itaconate; carboxylic acid containing monomers, such as (meth)acrylic acid, itaconic acid, fumaric acid, and maleic acid; phosphorus acid monomers such as phosphoethyl (meth)acrylate;

and sulfur acid monomers such as sodium vinyl sulphonate, 2-acrylamido-2-methylpropane sulfonic acid; vinyl sulphonic acid; styrene sulphonic acid; sulfoethyl (meth)acrylate, and methacryloxyisopropyl acid sulfophthalate; and hydroxy, dihydroxy, amino or diamino alkyl or aryl sulfonic acids, such as, 1,4-butanediol 2-sulfonic acid. Other suitable second monomers include multiethylenically unsaturated monomers, which are effective for increasing the molecular weight of the polymer particles. Examples of multiethylenically unsaturated monomers include tripropylene glycol di (meth)acrylate, diethylene glycol di(meth)acrylate, ethylene glycol di(meth)acrylate, 1,6-hexanediol di(meth)acrylate, 1,3-butylene glycol di(meth)acrylate, polyalkylene glycol di(meth)acrylate, diallyl phthalate, trimethylolpropane tri (meth)acrylate, divinylbenzene, divinyltoluene, trivinylbenzene, and divinyl naphthalene. The second monomers expressly exclude the crosslinking monomers.

The aqueous composition optionally contains two or more different polymers containing pendant crosslinking groups. For example, the aqueous composition may contain a polymer having acetoacetoxy groups and a polymer having cyanoacetoacetoxy groups. The two or more different polymers may have different glass transition temperatures.

Typically, the polymer having pendant crosslinking groups contains as polymerized units crosslinking monomer in the range of from 1 to 15 mole %, preferably in the range of from 1 to 10 mole %, and more preferably from 1 to 5 mole %, based on total polymerized monomer contained in the polymer. The total polymerized monomer contained in the polymer having pendant crosslinking groups is the polymerized crosslinking monomer, and any optional second monomer, such as the second monomer.

Alternatively, the polymer having pendant crosslinking groups is provided by a post reaction of a polymer having certain functional groups. For example, it is often particularly advantageous to introduce amine functional pendant crosslinking groups, (meth)acryloxy functional crosslinking groups, or allyl functional crosslinking groups using a post reaction step of a previously prepared polymer having certain functional groups. The polymer having certain functional groups, also referred to herein as "first functional groups", is prepared by standard polymerization techniques. For example, an addition polymer having first functional groups is polymerized from at least one monomer having first functional groups, such as acid groups, amine groups, hydroxyl groups, or epoxy groups. Examples of monomers having first functional groups include (meth)acrylate carboxylic acids such (meth)acrylic acid, itaconic acid, fumaric acid, and maleic acid; acid monomers that have been post reacted with an alkyl imine to produce a primary or secondary amine group; hydroxy alkyl (meth)acrylate monomers such as hydroxyethyl (meth)acrylate; and epoxy containing (meth)acrylate monomers such as glycidyl (meth)acrylate. After completion of the polymerization step, the polymer having first functional groups is reacted with a compound having both a complementary functional group and the crosslinking group, to provide the polymer having pendant crosslinking groups. For example, the polymer having pendant crosslinking groups can be prepared by reacting a polymer containing carboxylic acid functionality with compounds containing one or more aziridine rings. Suitable aziridine rings include rings having substituents on the nitrogen, or one or both carbons contained within the ring. Examples of suitable aziridines include ethyleneimine, propyleneimine, N-(2-hydroxyethyl) ethyleneimine, trimethylolpropane-tris-(β-(N-aziridinyl) propionate), and pentaerythritol trimethylolpropane-tris-(β-(N-aziridinyl) propionate).

As a further example, the polymer having pendant (meth)acryloxy crosslinking groups, or allyl crosslinking groups is prepared by first preparing a polymer having first functional groups such as pendant carboxylic acid groups, epoxy groups, amine groups or hydroxy groups. Next, the polymer having first functional groups is reacted with a compound having both a complementary functional group and a (meth)acryloxy or allyl crosslinking group. Suitable first functional groups for reaction with the complementary functional groups include, for example, carboxylic acid groups and amine groups, which react with an epoxy group as the complementary functional group; epoxy groups or hydroxyl groups, which react with carboxylic acid as the complementary reactive group; and carboxylic acid groups, which react with hydroxyl groups as the complementary reactive group. For example, a polymer having (meth)acryloxy groups is prepared by reacting a polymer having carboxylic acid groups with glycidyl(meth)acrylate or alternatively, by reaction a polymer having epoxy groups with (meth)acrylic acid. In a further example, a polymer having allyl groups is prepared by reacting a polymer having carboxylic acid groups with hydroxyl functional oleic material such as hydroxy functional amides or esters of unsaturated fatty acids, such as disclosed in U.S. Patent No. 4,292220 or U.S. Patent No. 4,233,362.

The polymer having pendant crosslinking groups typically has a minimum film formation temperature (MFFT) of less than 25 °C and preferably, less than 20 °C, and more preferably, less than 15 °C. The minimum film formation temperature of the polymer having pendant crosslinking groups is determined by ASTM test method D2354, in the absence of the unsaturated fatty acid esters or other materials that lower the minimum film formation temperature of polymers. In aqueous compositions that contain a blend of two or more polymers having pendant crosslinking groups, the MFFT is the MFFT of the blend of polymers.

In one embodiment, the polymer has acetoacetoxy groups as the pendant crosslinking groups. The polymer having acetoacetoxy groups contains as polymerized units from 0.5 to 20 weight %, preferably from 1 to 15 %, and most preferably, from 3 to 10 weight % of at least one acetoacetyl functional monomer, based on the weight of the

polymer. Further, this polymer is provided as an aqueous dispersion containing polymer particles wherein an excess stoichiometric amount of ammonia or primary amine is added to provide polymer particles bearing pendant enamine moieties.

In a further embodiment, the polymer having pendant crosslinking groups is a condensation polymer. Suitable condensation polymers include polyesters, polyethers, polyurethanes, polyureas, polyamides, and polyepoxides. The condensation polymers of this embodiment contain pendant crosslinking groups such as acetoacetoxy groups or groups formed from unsaturated fatty acids. Examples of condensation polymers having pendant crosslinking groups include polyesters with attached unsaturated fatty acid groups, often referred to as "air drying alkyds" and polyurethane polymers with attached unsaturated fatty acid groups, often referred to as "oil modified polyurethanes. Typically, these polymers are polymerized with copolymerized acid monomer in an organic solvent. After polymerization, the condensation polymer solution is dispersed into water to form an aqueous polymer dispersion. Solvent is removed by techniques well known in the art, such as steam stripping or vacuum stripping, to provide the condensation polymers of this embodiment as aqueous dispersions of polymer particles having low levels of VOCs.

The aqueous composition of this invention contains the polymer having pendant crosslinking groups as a partially or completely solubilized polymer in water or alternatively, as polymer particles dispersed in water.

In one embodiment, the polymer particles having pendant crosslinking groups are prepared by any process that provides polymerization of ethylenically unsaturated monomers having crosslinking groups. Suitable processes include suspension or emulsion polymerization, including for example, the processes disclosed in U.S. Patent 5,356,968 and U.S. Patent 5,264,530. An alternate process to prepare the polymer particles is solution polymerization followed by the conversion of the solution polymer to polymer particles by various methods known in the art. Aqueous emulsion polymerization is a preferred process for preparing the polymer particles having pendant crosslinking groups. Temperatures suitable for aqueous emulsion polymerization processes are in the range of from 20 °C to less than 100 °C, preferably in the range of from 40 °C to 95 °C, and more preferably in the range of from 50 °C to 90 °C. Suitable polymerization processes, which include emulsion polymerization, solution polymerization, and suspension polymerization processes, are typically conducted as batch, semicontinuous, or continuous processes. The polymerization processes commonly employ various synthesis adjuvants such as thermal or redox polymerization initiators, chain transfer agents, catalysts, surfactants, high molecular weight polymers, dispersants, salts, buffers, acids, or bases. Preferably, the use of organic solvents is minimized in the polymerization process to provide aqueous dispersions with low levels of VOCs. The aqueous dispersion containing the polymer particles having pendant crosslinking groups is optionally treated to remove VOCs by processes such as steam stripping or distillation. The aqueous dispersion containing the polymer having pendant crosslinking groups is typically provided at polymer solids levels in the range of at least 30 weight %, preferably from 35 to 70 weight %, and more preferably, in the range of from 40 to 60 weight %, based on the weight of the aqueous dispersion.

Suitable polymer particles having pendant crosslinking groups useful in the aqueous composition of this invention, have average diameters in the range of from 20 nanometers (nm) to 1 micron, preferably in the range of 80 nm to 500 nm, and more preferably, in the range of from 100 nm to 350 nm. The aqueous composition may contain a bimodal or multimodal distribution of diameters of the polymer particles having pendant crosslinking groups

In one embodiment the polymer particles having pendant crosslinking groups are made by two stage emulsion polymerization process. In the two stage polymerization process, a first polymer is prepared by aqueous emulsion polymerization of a first monomer mixture containing at least one second monomer, at least one multiethylenically unsaturated monomer, and optionally, at least one acid monomer or amide monomer to form particles of the first polymer. Next, a second polymer is prepared in the presence of the first polymer particles by aqueous emulsion polymerization of a second monomer mixture containing at least one second monomer, at least one acid monomer or amide monomer, and at least one crosslinking monomer. Preferred crosslinking monomers for preparing two stage polymer particles include acetoacetoxy functional monomers such as acetoacetoxyethylmethacrylate, acetoacetoxyethylacrylate, allylacetoacetate, acetoacetoxypropylmethacrylate, 2,3-di(acetoacetoxy)propyl methacrylate, vinyl acetoacetate, acetacetoxybutylmethacrylate, or combinations thereof. The two stage polymer particles useful in the aqueous composition have various morphologies including core/shell, acorn, interpenetrating polymers, multiple small polymer domains within a continuous polymer phase, and multilobe morphologies.

In another embodiment, the polymer having pendant crosslinking groups is provided as polymer particles, wherein each of the polymer particles contain from 10 to 70 weight % of a first polymer phase and from 30 to 90 weight % of a second polymer phase, based on the weight of the polymer particles. The first polymer phase contains as polymerized units from 0.1 to 10 weight % multiethylenically unsaturated monomer; from 0 to 5 weight % acid monomer or amide containing monomer; and from 85 to 99.9 weight % of at least one other second monomer that is not a multiethylenically unsaturated monomer, an acid monomer, or an amide containing monomer. Further, the first polymer phase is substantially free of acetoacetoxy groups and cyanoacetoxy groups. The glass transition temperature of the first polymer phase is in the range of from -30 °C to 100 °C. The second polymer phase contains as polymerized units from 1 to 20 weight % crosslinking monomer; from 0 to 10 weight % acid monomer or amide containing monomer; and

from 70 to 99 weight % of at least one other second monomer that is not a multiethylenically unsaturated monomer, an acid monomer, and an amide containing monomer. The glass transition temperature of the second polymer phase is in the range of from -10 °C to less than 18 °C. The polymer particles of this embodiment preferably have a core-shell morphology in which the first polymer phase forms the core and the second polymer phase forms the shell.

In a different embodiment, the aqueous composition contains from 2 to 30 weight % of hard polymer particles, and from 70 to 98 weight % of soft polymer particles, based on the total weight of the hard polymer particles and the soft polymer particles. The soft polymer particles have a glass transition temperature in the range of from -20 °C to 25 °C. The hard polymer particles have a glass transition temperature of greater than 25 °C and at least 10 °C greater than the glass transition temperature of the soft polymer particles. The hard polymer particles, the soft polymer particles, or both the hard polymer particles and the soft polymer particles are the polymers having pendant crosslinking groups.

The aqueous composition of this invention also contains at least one unsaturated fatty acid ester. The unsaturated fatty acid ester is a coalescent and lowers the minimum film formation temperature of the polymer particles having pendant crosslinking groups. The unsaturated fatty acid ester is also autoxidizable in the presence of atmospheric oxygen. After formation of a dry film from the aqueous composition, the oxidation of the unsaturated fatty acid ester results in the reduction or the elimination of the coalescent activity of the unsaturated fatty acid ester, leading to increased hardness in the dry film. Further, the oxidation of the unsaturated fatty acid ester results in the formation of reactive species, which are capable of increasing the rate of reaction of the pendant crosslinking groups of the coalesced polymer forming the dry film and enhancing the rate or the extent of crosslinking in the dry film. Crosslinks are formed between reacted pendant crosslinking groups, between reacted unsaturated fatty acid esters, or between a crosslinking group and an unsaturated fatty acid ester. The resulting dried crosslinked film has enhanced properties compared to uncrosslinked films or the dry films containing coalescents.

The unsaturated fatty acid esters suitable for use in the composition of this invention are characterized by the chemical structure $R_1C(O)OR_2$, wherein $R_1C(O)O$ is an unsaturated fatty acid component and $R_2$ is an organic group that forms the ester component. The group $R_1$ is a $C_8$ to $C_{28}$ hydrocarbon containing at least one unsaturated bond. The degree of unsaturation of the $R_1$ group is either monounsaturated or polyunsaturated, such as diunsaturated and triunsaturated. Suitable unsaturated fatty acid esters include monounsaturated fatty acids formed from palmitoleic acid, oleic acid, or caproleic acid; diunsaturated fatty acid esters formed from linoleic acid; triunsaturated fatty acid esters formed from linolenic acid or eleosteric acid, or mixtures thereof. Preferred are unsaturated fatty acid esters formed from monounsaturated, diunsaturated fatty acids, or mixtures thereof. More preferred are unsaturated fatty acid esters formed from diunsaturated fatty acid. The organic group, $R_2$, which forms the ester component of the unsaturated fatty acid ester, typically contains from 1 to 8 carbon atoms, and includes substituted or unsubstituted alkyl groups containing from 1 to 8 carbons, and alkyl ether groups. Examples of suitable unsubstituted alkyl groups include alkyl groups such as methyl, ethyl, n-propyl, isopropyl, and t-butyl groups. Examples of suitable substituted alkyl groups include alkyl groups containing alcohol moieties such as organic groups formed from ethylene glycol and propylene glycol. Examples of suitable alkyl ether groups include groups formed from polyethers such as diethylene glycol, triethylene glycol, dipropylene glycol, tripropylene glycol, and diethylene glycol monobutyl ether. Preferred unsaturated fatty acid esters include methyl and ethyl esters of diunsaturated fatty acids; and unsaturated fatty acid esters formed from ethylene glycol or propylene glycol.

Suitable sources for preparing the unsaturated fatty acid esters include unsaturated fatty acids or mixtures of unsaturated fatty acids derived from plant sources such as corn oil, cotton seed oil, peanut oil, olive oil, castor oil, dehydrated castor oil, wheat germ oil, poppy seed oil, safflower oil, soybean oil, and sunflower seed oil.

The unsaturated fatty ester or the mixture of unsaturated fatty acid esters contained in the aqueous composition is further characterized as having an average iodine number of at least 50, preferably at least 80, and more preferably at least 100. The average iodine number is a measure of the degree of unsaturation of the unsaturated fatty acid ester or the mixture of unsaturated fatty acid esters, and is determined using ASTM method 1959-97. The aqueous composition containing one or more unsaturated fatty acid esters having an iodine number of at least 50, has sufficient reactivity in the presence of atmospheric oxygen to induce crosslinking in the dry coating and deactivate the unsaturated fatty acid esters as coalescents. The oxidation of the unsaturated fatty acid esters and the crosslinking reactions in the dry film are sufficiently fast to allow the use of the aqueous composition in coating applications such as interior or exterior paints.

The aqueous composition of this invention is also characterized as containing less than 10 weight % triunsaturated fatty acid ester, preferably, less than 8 weight %, and more preferably at least less than 5 weight %, based on the total weight of the unsaturated fatty acid esters contained in the aqueous composition. The use of the triunsaturated fatty acid esters in combination with the polymer having pendant crosslinking groups are believed to lead to the development of yellow color in the dried crosslinked films prepared from the aqueous composition of the present invention.

In the aqueous composition, suitable levels of polymer having pendant crosslinking groups are in the range of from 5 to 70 weight %, preferably from 10 to 65 weight %, and more preferably, in the range of from 15 to 55 weight

%, based on the weight of the aqueous composition. Suitable levels of the one or more unsaturated fatty acid esters in the aqueous composition are in the range of from 0.1 to 5 weight %, preferably from 0.25 to 4 weight %, and more preferably, in the range of from 0.3 to 3 weight %, based on the weight of the aqueous composition. The aqueous composition typically includes from 20 to 79 weight % aqueous medium, based on the weight of the aqueous composition.

A volatile organic compound ("VOC") is defined herein as a carbon containing compound that has a boiling point below 290 °C at atmospheric pressure. Compounds such as water and ammonia are excluded from VOCs.

The aqueous composition of this invention contains less than 5% VOC by weight based on the total weight of the aqueous composition; preferably the aqueous composition contains less than 3% VOC by weight based on the total weight of the aqueous composition; more preferably the aqueous composition contains less than 1.7% VOC by weight based on the total weight of the aqueous composition. A "low VOC" aqueous composition herein is an aqueous composition that contains less than 5% VOC by weight based on the total weight of the aqueous composition; preferably it contains between 0.01% and 1.7% by weight based on the total weight of the aqueous composition.

Additionally, the low VOC aqueous composition optionally contains coalescing agents that are not VOCs. A coalescing agent is a compound that is added to a water-borne emulsion polymer, paint or coating to reduce the minimum film forming temperature of the emulsion polymer, paint or coating by at least 1°C. A non-VOC coalescing agent is thus defined as a coalescing agent which has a boiling point above 290°C at atmospheric pressure.

Typical methods of paint or coating preparation introduce adventitious VOCs from the aqueous dispersion containing the polymer particles having pendant crosslinking groups, biocides, defoamers, soaps, dispersants, and thickeners. These typically account for 0.1% VOC by weight based on the total weight of the aqueous composition. Additional methods such as steam stripping and choice of low VOC containing additives like biocides, defoamers, soaps, dispersants, and thickeners are suitable for further reducing the aqueous composition to less than 0.01% VOC by weight based on the total weight of the aqueous composition.

In addition, the aqueous composition optionally includes other components, including other polymers, surfactants, pigments, extenders, dyes, pearlescents, adhesion promoters, crosslinkers, dispersants, defoamers, leveling agents, optical brighteners, ultraviolet stabilizers, absorbing pigments, coalescents, rheology modifiers, preservatives, biocides, polymer particles having internal voids, and antioxidants, provided that the aqueous composition contains less than 5 % VOC by weight. Auto oxidation can further be enhanced by the use of metal ion catalysts such as cobalt, zirconium, calcium, manganese, copper, zinc and iron. Simple salts such as halides, nitrates, and sulfates maybe used but in many cases an organic anion such as the acetate, naphthenate or acetoacetonate is used.

Optionally, the aqueous composition contains crosslinking agents that are reactive with the pendant crosslinking groups. Generally, the type and the level of crosslinking agent are chosen such that the ability of the aqueous composition to form a film is not materially affected. Suitable crosslinking agents include, for example, multifunctional amine compounds, oligomers and polymers that have at least two amine groups such as hexamethylene diamine, ethylenediamine, 1,2-diaminopropane, 2-methyl-1,5-pentane diamine, 1,4-diaminobutane, 1,12-diaminododecane, 1,2-diaminocylcohexane, 1,2-phenyldiamine, diaminotoluene, polyethylene imine, difunctional and trifunctional Jeffamines™ curing agents (Huntsman Petrochemical Corporation), and aqueous polyurethane dispersions with pendant amino, hydrazide or hydrazine groups; aminosilanes such as 3-aminopropyltrimethoxysilane, 3-aminopropyltriethoxysilane, 3-aminopropylmethyldimethoxysilane, 3-aminopropylmethyldiethoxysilane, 3-aminopropyltriisopropoxysilane, 3-aminopropylmethyldiisopropoxysilane, 3-aminopropylmethyldiisopropoxysilane, 3-aminopropyltriisopropoxysilane, N-2-aminoethyl-3-aminopropyltrimethoxysilane, N-2-aminoethyl-3-aminopropyltriethoxysilane, N-2-aminoethyl-3-aminopropylmethyldimethoxysilane, N-2-aminoethyl-3-aminopropylmethyldiethoxysilane, N-2-aminoethyl-3-aminopropyltriisopropoxysilane, N-2-aminoethyl-3-aminopropyltriisopropoxysilane, N-2-aminoethyl-3-aminopropylmethyldiisopropoxysilane, and N-2-aminoethyl-3-aminopropylmethyldiisopropoxysilane; epoxy silanes such as glycidoxypropyltrimethoxysilane, glycidoxypropylmethyldimethoxysilane, glycidoxypropyltriethoxysilane, glycidoxypropylmethyldiethoxysilane, or beta-(3,4-epoxycyclohexyl)ethyltriethoxysilane; multifunctional isocyanates such as Bayhydur™ XP-7063 isocyanate (Bayer); polyaziridines such as trimethylolpropane-tris-(β-(N-aziridinyl)propionate) or pentaerythritol trimethylol propane-tris-(β-(N-aziridinyl)propionate); aliphatic carbodiimides such as Ucarlink™ XL-29SE crosslinker (Dow Chemical Co.), or those disclosed in U.S. Patent No. 4,977,219; aromatic carbodiimides such as disclosed in U. S. Patent No. 5,574,083; divalent metal ions such as $Zn^{2+}$, $Mg^{2}$+, $Ca^{2+}$; and zirconates such as ammonium zirconium carbonate. Preferably, the multifunctional amine compounds employed as crosslinking agents in the aqueous composition are primary amine groups. Preferred levels for the multifunctional amine compounds with primary amine groups in the aqueous composition is a ratio of 0.1 to 1 primary amine groups per acetoacetoxy group, cyanoacetoxy groups, or combination thereof. Preferred aminosilanes include N-2-aminoethyl-3-aminopropylmethyldimethoxysilane, N-2-aminoethyl-3-aminopropyltrimethoxysilane, and 3-aminopropylmethyldimethoxysilane.

Suitable pigment levels in the aqueous composition of this invention are in the range of from zero to 70 volume %, preferably from zero to 40 volume %, and more preferably, from 2 to 25 volume %, based on the total volume of pigment and polymer contained in the aqueous composition.

A method of preparing a nonyellowing crosslinked coating from the aqueous composition of this invention includes: applying the aqueous composition onto a substrate; drying or allowing to dry the aqueous composition that was applied onto the substrate to prepare a dry coating; and crosslinking or allowing to crosslink the dry coating to provide the nonyellowing crosslinked coating. A nonyellowing crosslinked coating refers to a coating that does not become substantially more yellow during exposure to environmental conditions, such as exposure to oxygen, light, or moisture, compared to a comparative coating containing coalescent but absent the unsaturated fatty acid ester.

The aqueous composition is suitable for application onto a substrate to prepare a dry coating. Various techniques are employed to apply the aqueous composition onto a substrate including, for example, brushing, rolling, drawdown, dipping, with a knife or trowel, curtain coating, and spraying methods such as, for example, air-atomized spray, air-assisted spray, airless spray, high volume low pressure spray, and air-assisted airless spray. The wet coating thickness of the applied aqueous composition may be in the range of 1 micron to 250 microns. The aqueous composition is applied onto a substrate as a single coat or multiple coats. After application, the applied aqueous composition is typically allowed to dry at ambient conditions or alternatively dried by the application of heat to provide a dry coating. Drying is typically allowed to proceed under ambient conditions such as, for example, at 0 °C to 35 °C.

The aqueous composition is suitable for application onto various substrates including processed timber such as medium density fiber board, chip board, laminates; mineral substrates such as masonry, cement, fiber cement, cement asbestos, plaster, plasterboard, glazed and unglazed ceramic; metal substrates such as galvanized iron, galvanized steel, cold rolled steel, Zincalum metal, Zincalum II metal, aluminum, wrought iron, drop forged steel, stainless steel; previously painted or primed surfaces (fresh, aged or weathered) including but not limited to acrylic coatings, vinyl acrylic coatings, styrene acrylic coatings, powder coated surfaces, solvent acrylic coatings, alkyd resin coatings, solvent urethane coatings, epoxy coatings; cellulosic substrates such as paper and paperboard; glass; asphalt; leather; wallboard; nonwoven materials; and synthetic substrates such as polyvinyl chloride, polyvinylidene chloride, polyethylene, and polypropylene.

The dry coating prepared from the aqueous composition is suitable as a protective coating or an aesthetic coating. Examples of suitable coatings include architectural coatings such as interior and exterior paint coatings, including masonry coatings, wood coating and treatments; floor polishes; maintenance coatings such as metal coatings; paper coatings; and traffic coatings such as those coatings used to provide markings on roads, pavements, and runways.

The following examples are presented to illustrate the composition and the process of the invention. These examples are intended to aid those skilled in the art in understanding the present invention. The present invention is, however, in no way limited thereby.

Experimental Methods

Low Temperature Film Formation Test: A dry coated sample is prepared by applying the aqueous composition onto a white pine board using a brush applicator at a temperature of 4.4 °C and 70% relative humidity (RH). The pine board, the aqueous compositions, and the testing materials are equilibrated to the temperature and humidity of the test conditions prior to use. The aqueous compositions are applied as strips perpendicular to the length of the board. The size of the strips is at least 5 cm by 12.7 cm and the amount of applied aqueous composition is 110 $cm^2$/milliliter (450 $ft^2$/gal). After application, the coated samples are allowed to dry at test conditions for at least 24 hours.
Evaluation of the Degree of Cracking - The degree of cracking of the dry paint samples is evaluated visually using a 10X magnifying glass. The degree of cracking is reported using the following scale:

10 = none
9 = trace
8 = trace/slight
7 = slight
6 = slight/moderate
5 = moderate
4 = moderate/heavy
3 = heavy
2 = heavy/very heavy
1 = very heavy

A rating of 6 or greater indicated good film formation.
Block Resistance Test: Dry coated samples are prepared by applying a 76 micron thick wet film of the aqueous compositions onto Leneta Form WB using a drawdown applicator. The coated samples are dried for 7 days at 25 °C and 50% relative humidity. Each of the dry coated samples is cut into four separate square sections of 3.8 cm x 3.8 cm.

Pairs of the cut sections are placed with their coated surfaces touching. The coated pairs are placed on a flat metal plate at a temperature of either 25 °C or 50 °C. A number 8 rubber stopper is placed on top of each coated pair and then a 1 kilogram (kg) weight is placed on top of each stopper. The stopper and the 1 kg weight are equilibrated to the specified temperature prior to use. After 30 minutes, the stopper and the 1 kg weight are removed from the coated pair. The coated pair is allowed 30 minutes to equilibrate to room temperature. Next, the two sections of each coated pair are separated by hand using a slow and steady force, while maintaining an angle of approximately 180° and listening for tack. The coated samples are rated for block resistance on a scale of 0 to 10 as follows:

10 = no tack, perfect
9 = trace tack, excellent
8 = slight tack, very good
7 = slight tack, good
6 = moderate tack, good
5 = moderate tack, fair
4 = severe tack, no seal, fair
3 = 5-25% seal, poor
2 = 25-50% seal, poor
1 = 50-75% seal, poor
0 = complete seal, very poor

A block rating of 6 and above indicated acceptable block properties.

Pencil Hardness: This test measures the hardness of a dry coating based on the scratching of the dry coating with pencil leads of known hardness. The result is reported as the hardest pencil lead that will not scratch or cut through the dry coating to the substrate. The dry film is prepared by applying a 123 micron thick wet film of the aqueous composition onto an aluminum panel with drawdown applicator. The applied wet film is allowed to dry at 24 °C and 50% relative humidity for a specified time.

The film hardness was rated from softest to hardest according the pencil hardness scale of 6B-5B-4B-3B-2B-B-HB-F-H-2H-3H-4H-5H-6H-7H-8H. The difference between two adjacent pencil leads is considered one unit of hardness.

The pencil leads are flattened prior to use by holding the lead holder at an angle of 90° to sand paper, rubbing the lead against the sand paper while maintaining an angle of 90° to the sand paper, until a flat, smooth, and circular cross section is obtained. The edge of the cross section of the pencil lead is without chips or nicks.

The aluminum panel with the dry coating is placed on a horizontal surface. Starting with the softest lead (6B), the lead is pushed at a 45° angle away from the operator, with sufficient uniform pressure downward and forward either to cut through the dry film or to crumble the edge of the lead. The length of the stroke is approximately 6 mm. The procedure is repeated with the next hardest pencil lead until a pencil lead is found that will cut through the film to the substrate for a distance of at least 3 mm. Next, the procedure is repeated with a pencil lead having one unit lower in pencil hardness to verify the endpoint. Two determination are made for each dry film.

<u>Color Measurement of Dry Coating</u>: The color appearance is measured to characterized the extent of yellowing of the dried, crosslinked coating.

A titanium dioxide slurry is prepared by admixing with high shear 12.52 g deionized water, 2.86 g Tamol™ 731A dispersant (Rohm and Haas Co.), 0.25 g Tego Foamex™ 810 defoamer (Goldschmidt), 0.5 g Surfynol™ CT-111 surfactant (Air Products and Chemicals), and 57.19 g TiPure™ R-706 titanium dioxide (E.I. DuPont deNemours and Company). A base composition is prepared by combining the titanium dioxide slurry with the following ingredients: 6.26 g deionized water, 154.45 g of the aqueous polymer dispersion containing the polymer particles having pendant crosslinking groups (at 45 weight % solids), 4.26 g propylene glycol, 0.25 g Surfynol™ CT-111 surfactant, 2.91 g Acrysol™ RM-2020 NPR thickener (Rohm and Haas Company), 0.40 g Acrysol™ RM-8W thickener, and 14.70 g deionized water. Next, the base composition is divided into two equal portions. To the first portion is added with mixing 2 grams of the unsaturated fatty acid ester to prepare the aqueous composition of this invention. To the second portion is added with mixing 2 gram of Texanol™ coalescent (Eastman Chemical Co.) to prepare a comparative composition. The compositions are allowed to stand for 24 hours prior to use.

Dried coated samples are prepared for each composition by applying a 76 micron thick wet film of the composition onto a white Leneta chart. The applied coatings are allowed to dry at 24 °C and 50% relative humidity for 24 hours.

The initial colors of the dried coated samples are determined using a laboratory colorimeter to measure the initial b* values. Measurements are made with a standard laboratory colorimeter that conforms to the ASTM E308-01 Standard Practice for Computing the Colors of Objects by Using the CIE System. The CIE $D_{65}$ light source is used as employed in the Minolta CR300 colorimeter (Minolta Corp., N.J.). Color is reported using the L, a, b* scale. The b*

value represents the blue-yellow axis, wherein yellow is indicated by positive values for b* and blue is indicated by negative values for b*. Next, the dried coated samples are placed in a dark oven at 60 °C for 28 days. After 28 days, the colors of the dried coated samples are remeasured. The relative yellowing value, $Y_r$, is determined using the following equation:

$$Y_r = (b^*_{exp,28days} - b^*_{exp,\ initial}) - (b^*_{Texanol,28days} - b_{\ Texanol,intial}),$$

wherein:

> $b^*_{Texanol,\ initial}$ and $b^*_{Texanol,\ 28days}$ are the initial value for b* and the b* after 28 days, respectively, for the comparative dried coated sample prepared from the comparative composition containing Texanol™ coalescent; and $b^*_{exp,\ initial}$ and $b^*_{exp,28days}$ are the initial value for b* and the b* after 28 days, respectively, for the dried coated sample prepared from the aqueous composition of this invention, which contained the unsaturated fatty acid ester.

A dry coating that is nonyellowing is indicated by a value for $Y_r$ in the range of 1 or less. A dry coating that is yellowing is indicated by a $Y_r$ value of greater than 1.

Example 1 - Preparation of Aqueous Dispersions Containing Polymer Particles Having Acetoacetoxy Groups

Example 1.1

The aqueous dispersion containing the polymer particles having first acetoacetoxy groups is prepared in a 5-liter, four-necked round bottom flask equipped with a paddle stirrer, a thermometer, a nitrogen inlet, and a reflux condenser.

To the flask is added 1400 g of deionized water and 10.4 g of a 58 weight % aqueous solution of a sulfated nonylphenol ethoxylate with 4 moles of polyethylene oxide (surfactant A). The contents of the flask are heated to 83 °C under a nitrogen atmosphere. A first monomer emulsion (ME-1) is prepared by mixing 145 g deionized water, 6.6 g of 58 wt. % aqueous solution of surfactant A, 361.1 g butyl acrylate, 433.3 g methyl methacrylate, 4.0 g methacrylic acid, and 4.0 g allyl methacrylate. A second monomer emulsion (ME-2) is prepared by mixing 476 g deionized water, 15.6 g of 58 wt. % aqueous solution of surfactant A, 541.6 g butyl acrylate, 445.6 g methyl methacrylate, 180.6 g acetoacetoxyethyl methacrylate, and 36.1 g of methacrylic acid. To the flask is added 110 g of ME-1 followed by the addition of a solution containing 4 g of ammonium persulfate dissolved in 22 grams deionized water. The remainder of ME-1 and a separate co-feed of a solution containing 0.72 g ammonium persulfate dissolved in 47.2 grams of deionized water, are added to the flask while maintaining the contents of the flask at a temperature in the range of from 83 °C-85 °C. After the complete addition of ME-1, the contents of the flask are maintained at a temperature of 83 °C-85 °C for a period of 15 minutes. Next, ME-2 and a solution of 1.08 g ammonium persulfate dissolved in 70.8 g deionized water are fed separately to the flask while maintaining the reactor contents at a temperature of 83 °C-85 °C. After the complete addition of ME-2, the contents of the flask is cooled at a temperature of 75 °C and a solution of 46.9 g of 29 % ammonium hydroxide dissolved in 49.0 g deionized water is added. The resulting aqueous dispersion, Example 1.1, contains polymer solids of 43.0 weight % and a Brookfield viscosity of 0.09 Pascal second. The polymer particles of Example 1.1 have an average particle diameter of 104 nm and contain 40 weight % of a first polymer formed from ME-1 and 60 weight % of a second polymer formed from ME-2.

Comparative A

The aqueous dispersion of Comparative A is prepared by the general process of Example 1.1, except that the second monomer emulsion (ME-2) is prepared by mixing 476 g deionized water, 15.6 g of 58 wt. % solution of surfactant A, 631.9 g butyl acrylate, 535.9 g methyl methacrylate, and 36.1 g of methacrylic acid. The resulting aqueous dispersion, Comparative A, is diluted with deionized water to yield a final polymer solids of 42.9 wt. % and a Brookfield viscosity of 0.134 Pa-s. The polymer particles of Comparative A have an average diameter of 115 nm and contain 40 weight % of a first polymer formed from ME-1 and 60 weight % of a second polymer formed from ME-2.

Table 1.1 -

| Composition of Polymer Particles (weight % based on weight of the polymer particles) | | |
|---|---|---|
| Polymerized Monomer | Example 1.1 | Comparative A |
| First Polymer | 40 | 40 |
| butyl acrylate | 18 | 18 |
| methyl methacrylate | 21.6 | 21.6 |
| methacrylic acid | 0.2 | 0.2 |
| allyl methacrylate | 0.2 | 0.2 |
| Second Polymer | 60 | 60 |
| butyl acrylate | 27 | 31.5 |
| methyl methacrylate | 22.2 | 26.7 |
| acetoacetoxyethyl methacrylate | 9 | 0 |
| methacrylic acid | 1.8 | 1.8 |

The polymer particles of Example 1.1 and Comparative A have minimum film formation temperatures of less than 20 °C.

Example 2 - Preparation of Aqueous Composition and Comparative Aqueous Compositions

Aqueous composition of this invention and comparative aqueous compositions are prepared containing the polymer particles of Example 1.1 or Comparative A.

A titanium dioxide slurry is prepared by admixing with high shear the ingredients listed in Table 2.1.

Table 2.1 -

| Titanium Dioxide Slurry | |
|---|---|
| Ingredient | Amount |
| water | 53.8 g |
| Tamol™ 731A dispersant (Rohm and Haas Company, Philadelphia, PA) | 12.1 g |
| Tego Foamex™ 810 defoamer (Goldschmidt Chemical Corp., Hopewell, VA) | 1.0 g |
| Surfynol™ CT-111 surfactant (Air Products and Chemicals, Inc., PA) | 1.9 g |
| TiPure™ R-706 titanium dioxide (E.I. DuPont de Nemours and Company) | 228.4 g |

The aqueous composition and comparative aqueous compositions are prepared by combining the ingredients listed in Table 2.2a and Table 2.2b. The methyl linoleate (diunsaturated) is 99 weight % pure and contains less than 1 weight % esters of linolenic acid (triunsaturated), and has an iodine number of greater than 50. The methyl linolenate (triunsaturated) is 99 weight % pure and contains less than 1 weight % esters of linolenic acid (diunsaturated), and has an iodine number of greater than 50.

Table 2.2a -

| Aqueous Compositions and Comparative Aqueous Compositions Containing Example 1.1 | | | | |
|---|---|---|---|---|
| Ingredient | Example 2.1 | Comparative B.1 | Comparative B.2 | Comparative B.3 |
| titanium dioxide slurry | 74.2 g | 74.2 g | 297.2 g | 297.2 g |
| Example 1.1 | 153.8 g | 153.8 g | 580.5 g | 580.5 g |
| water | 24.5 g | 24.5 g | 99.1 g | 116.8 |
| methyl linoleate | 4.2 g | - | - | - |
| methyl linolenate | - | 4.2 g | - | - |

Table 2.2a - (continued)

| Aqueous Compositions and Comparative Aqueous Compositions Containing Example 1.1 | | | | |
|---|---|---|---|---|
| Ingredient | Example 2.1 | Comparative B.1 | Comparative B.2 | Comparative B.3 |
| Texanol™ coalescent | - | - | 16.8 g | - |
| Surfynol™ CT-111 surfactant | 0.25 g | 0.25 g | 1.0 g | 1.0 g |
| Acrysol™ RM-2020 NPR rheology modifier | 3.1 g | 3.1 g | 12.4 g | 12.4 g |
| Acrysol™ RM-8W rheology modifier | 0.13 g | 0.13 g | 0.5 g | 0.5 g |
| VOC Level (weight %) | zero | zero | 1.6 % | zero |

Texanol is a trademark of Eastman Chemical Corp., Kingsport, TN. Acrysol™ is a trademark of Rohm and Haas Company, Philadelphia, PA. Surfynol™ is a trademark of Air Products and Chemicals, Inc., PA.

Table 2.2b -

| Comparative Aqueous Compositions Containing Comparative A | | | | |
|---|---|---|---|---|
| Ingredient | Comparative C.1 | Comparative C.2 | Comparative C.3 | Comparative C.4 |
| titanium dioxide slurry | 74.2 g | 74.2 g | 297.2 g | 297.2 g |
| Comparative A | 155.0 g | 155.0 g | 620.1 g | 620.1 g |
| water | 18.6 g | 18.6 g | 76.8 g | 112.1 g |
| methyl linoleate | 4.2 g | - | - | - |
| methyl linolenate | - | 4.2 g | - | - |
| Texanol™ coalescent | - | - | 16.8 g | - |
| Surfynol™ CT-111 surfactant | 0.25 g | 0.25 g | 1.0 g | 1.0 g |
| Acrysol™ RM-2020 NPR rheology modifier | 3.1 g | 3.1 g | 12.4 g | 12.4 g |
| Acrysol™ RM-8W rheology modifier | 0.13 g | 0.13 g | 0.5 g | 0.5 g |
| VOC Level (g/liter) | zero | zero | 1.6 % | zero |

Example 3 - Evaluation of the Aqueous Compositions and Comparative Aqueous Compositions

The low temperature film formation (LTFF) temperatures of the aqueous composition and comparative aqueous compositions, and the properties of dry films formed from these compositions are determined and are reported in Table 3.1. Film formation is not observed at room temperature or below for Comparative C.4. Further characterization of the block, pencil hardness, color, and LTFF is not made for this sample.

Table 3.1 -

| Properties of Dry Films of Aqueous Coating Compositions | | | | | | | |
|---|---|---|---|---|---|---|---|
| Dry coating Example | LTFF | Block | | Pencil Hardness | | | $Y_r$ |
| Test Conditions | 4.4 °C/ 70% RH | 24 °C | 49 °C | 7days/ 24 °C | 14days/ 24 °C | 7days/ 60 °C | 28days/ 60 °C |
| Example 2.1 | 10 | 6 | 7 | 3B | B | B | <1 |
| Comparative B. 1 | 8 | 7 | 8.5 | 3B | B | B | >1 |

Table 3.1 - (continued)

| Properties of Dry Films of Aqueous Coating Compositions | | | | | | | |
|---|---|---|---|---|---|---|---|
| Dry coating Example | LTFF | Blc | | | | | $Y_r$ |
| Comparative B. 2 | 8 | 9.5 | 8 | 4B | 3B | 2B | - |
| Comparative B. 3 | 2 | 9 | 9 | 3B | B | B | - |
| Comparative C. 1 | 9 | 5 | 6 | 4B | 4B | B | <1 |
| Comparative C. 2 | 9 | 5 | 6 | 3B | 3B | 3B | >1 |
| Comparative C. 3 | 8 | 7 | 7 | 3B | 2B | 2B | - |

The results in Table 3.1 show that the comparative compositions without coalescent, as exemplified by Comparative B.3 and Comparative C.4, do not have good film formation, as characterized by the low temperature film formation rating (LTFF). Example 2.1 and Comparative C.1, which contain methyl linoleate as the coalescent, and Comparatives B.1 and C.2, which contain methyl linolenate as the coalescent, have similar film formation characteristics and block resistance properties as Comparatives B.2 and C.3, which contain Texanol™ coalescent.

The dry films that are prepared from compositions containing methyl linoleate or methyl linolenate have equivalent or increased pencil hardness after a period of 7 days at 24 °C, compared to the dry films that are prepared from compositions containing Texanol™ coalescent. However, after a period of 14 days at 24 °C or a period of 7 days at 60 °C, the dry films prepared from the polymer having pendant crosslinking groups and unsaturated fatty acid esters, as exemplified by the compositions of Example 2.1 and Comparative B.1, have higher pencil hardness measurements than the dry films prepared from a polymer that does not having pendant crosslinking groups, as exemplified by Comparatives C.1 and C.2. This indicates that the polymer containing pendant crosslinking groups undergoes crosslinking to increase the hardness of the dry film. The comparative sample containing polymer with pendant crosslinking groups and fugitive coalescent, as exemplified by Comparatives B.2, has a lower hardness value than Comparative B.3, which is prepared without coalescent. This indicates that unevaporated coalescent remains in the dry film of Comparative B. 2, which adversely affects hardness.

The dry films of Example 2.1 and Comparative C.1, which are prepared from the compositions containing diunsaturated methyl linoleate, are nonyellowing as indicated by $Y_r$ values of less than 1. In contrast, the comparative dry films of Comparatives B.1 and C.2, which are prepared from compositions containing greater than 10 weight % triunsaturated methyl linolenate, based on the total weight of the unsaturated fatty acid ester in the composition, are yellowing, as indicated by $Y_r$ values of greater than 1.

The results demonstrate that the aqueous composition of this invention, as exemplified by Example 2.1, provides a nonyelllowing film having a combination of good film formation, acceptable levels of hardness, and good block resistance. Further, the aqueous compositions of this invention, as exemplified by Example 2.1, is a low VOC composition.

## Claims

**1.** An aqueous composition comprising:

a) polymer having pendant crosslinking groups; and
b) one or more unsaturated fatty acid esters;

wherein said unsaturated fatty acid esters have an average iodine number of at least 50;
wherein said unsaturated fatty acid esters comprise less than 10 weight % triethylenically unsaturated fatty acid ester based on the weight of said unsaturated fatty acid esters; and
wherein said aqueous composition comprises less than 5 weight % volatile organic compounds based on weight of said aqueous composition.

**2.** The aqueous composition according to claim 1 wherein said pendant crosslinking groups are selected from the group consisting of acetoacetoxy groups, cyanoacetoxy groups, amine groups, and vinyl groups.

**3.** The aqueous composition according to claim 1 wherein said polymer has a minimum film formation temperature of less than 25 °C.

**4.** The aqueous composition according to claim 1 wherein said unsaturated fatty acid ester is selected from the group consisting of esters of palmitoleic acid, oleic acid, caproleic acid, linoleic acid, and mixtures thereof.

**5.** The aqueous composition according to claim 1 comprising less than 1.7 weight % of said volatile organic compounds based on weight of said aqueous composition.

**6.** The aqueous composition according to claim 1 wherein said polymer having pendant crosslinking groups comprising as polymerized units, from 1 to 10 mole % crosslinking monomer, based on total polymerized monomer contained in said polymer having pendant crosslinking groups.

**7.** A method of preparing a nonyellowing crosslinked coating, comprising the steps of:

a) applying an aqueous composition onto a substrate; wherein said aqueous composition comprises:

1) polymer having pendant crosslinking groups; and
2) one or more unsaturated fatty acid esters;

wherein said unsaturated fatty acid esters have an average iodine number of at least 50;
wherein said unsaturated fatty acid esters comprise less than 10 weight % triethylenically unsaturated fatty acid ester based on the weight of said unsaturated fatty acid esters; and
wherein said aqueous composition comprises less than 5 weight % volatile organic compounds based on weight of said aqueous composition;
b) drying or allowing to dry said aqueous composition applied to said substrate to prepare a dry coating; and
c) crosslinking or allowing to crosslink said dry coating in the presence of oxygen to provide said nonyellowing crosslinked coating.

**8.** The method according to claim 7 comprising less than 1.7 weight % of said volatile organic compounds based on the weight of said aqueous composition.

**9.** The method according to claim 7 wherein said polymer has a minimum film formation temperature of less than 25 °C.

**10.** The method according to claim 9 wherein said aqueous composition comprises from 0.1 to 3 weight % of said unsaturated fatty acid esters, based on the weight of said aqueous composition.

European Patent Office

# EUROPEAN SEARCH REPORT

Application Number
EP 04 25 0639

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 599 478 A (ROHM & HAAS) 1 June 1994 (1994-06-01) * claims 1,3,6,7 * | 1,2,7 | C09D133/00 C09D4/06 |
| X | EP 0 844 284 A (NITTO CHEMICAL INDUSTRY CO LTD) 27 May 1998 (1998-05-27) * page 10, lines 15-17; claim 1 * | 1 | |
| X | US 4 263 194 A (TURPIN EDWARD T) 21 April 1981 (1981-04-21) * claim 1 * | 1 | |
| A | US 4 016 312 A (LUTHARDT HANS J) 5 April 1977 (1977-04-05) * the whole document * | 1 | |
| A | EP 0 372 804 A (RTZ CHEMICALS LTD) 13 June 1990 (1990-06-13) * page 3, lines 41-44 * | 1 | |
| A | US 6 270 905 B1 (EISS DIETER ET AL) 7 August 2001 (2001-08-07) * column 9, lines 48-63 * | 1 | TECHNICAL FIELDS SEARCHED (Int.Cl.7) C09D |

The present search report has been drawn up for all claims

| Place of search | Date of completion of the search | Examiner |
|---|---|---|
| The Hague | 15 June 2004 | Meulemans, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 25 0639

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2004

| Patent document cited in search report | Publication date | Patent family member(s) | Publication date |
|---|---|---|---|
| EP 0599478 A | 01-06-1994 | US 5349026 A | 20-09-1994 |
| | | AT 151808 T | 15-05-1997 |
| | | AU 669396 B2 | 06-06-1996 |
| | | AU 5025293 A | 02-06-1994 |
| | | BR 9304767 A | 31-05-1994 |
| | | CA 2102850 A1 | 21-05-1994 |
| | | CN 1092088 A ,B | 14-09-1994 |
| | | CN 1258697 A ,B | 05-07-2000 |
| | | DE 69309859 D1 | 22-05-1997 |
| | | DE 69309859 T2 | 27-11-1997 |
| | | EP 0599478 A1 | 01-06-1994 |
| | | FI 935147 A | 21-05-1994 |
| | | HK 97697 A | 08-08-1997 |
| | | JP 6207130 A | 26-07-1994 |
| | | NO 934131 A | 24-05-1994 |
| | | SG 67889 A1 | 19-10-1999 |
| | | US 5426129 A | 20-06-1995 |
| EP 0844284 A | 27-05-1998 | AU 704547 B2 | 29-04-1999 |
| | | AU 6669796 A | 12-03-1997 |
| | | EP 0844284 A1 | 27-05-1998 |
| | | CA 2229089 A1 | 27-02-1997 |
| | | WO 9707167 A1 | 27-02-1997 |
| | | TW 517250 B | 11-01-2003 |
| | | US 6024895 A | 15-02-2000 |
| US 4263194 A | 21-04-1981 | US 4221647 A | 09-09-1980 |
| | | CA 1121935 A1 | 13-04-1982 |
| | | JP 56004670 A | 19-01-1981 |
| US 4016312 A | 05-04-1977 | NL 7407256 A | 02-12-1975 |
| | | AT 340547 B | 27-12-1977 |
| | | AT 412375 A | 15-04-1977 |
| | | CH 581507 A5 | 15-11-1976 |
| | | DE 2523426 A1 | 11-12-1975 |
| | | DK 239975 A | 01-12-1975 |
| | | FR 2275510 A1 | 16-01-1976 |
| | | GB 1484653 A | 01-09-1977 |
| | | JP 51026946 A | 05-03-1976 |
| | | NO 751892 A | 02-12-1975 |
| | | SE 400193 B | 20-03-1978 |
| | | SE 7506120 A | 01-12-1975 |
| EP 0372804 A | 13-06-1990 | US 4906684 A | 06-03-1990 |
| | | AT 88207 T | 15-04-1993 |
| | | AU 627797 B2 | 03-09-1992 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 25 0639

This annex lists the patent family members relating to the patent documents cited in the above-mentioned European search report.
*The members are as contained in the European Patent Office EDP file on*
The European Patent Office is in no way liable for these particulars which are merely given for the purpose of information.

15-06-2004

| Patent document cited in search report | Publication date | Patent family member(s) | Publication date |
|---|---|---|---|
| EP 0372804 A | | AU 4593389 A | 14-06-1990 |
| | | CA 2000577 A1 | 09-06-1990 |
| | | DE 68906002 D1 | 19-05-1993 |
| | | DE 68906002 T2 | 14-10-1993 |
| | | EP 0372804 A2 | 13-06-1990 |
| | | ES 2057149 T3 | 16-10-1994 |
| | | JP 2242866 A | 27-09-1990 |
| | | JP 2617589 B2 | 04-06-1997 |
| | | ZA 8909273 A | 28-10-1992 |
| US 6270905 B1 | 07-08-2001 | US 6316119 B1 | 13-11-2001 |
| | | AT 265502 T | 15-05-2004 |
| | | AU 3230100 A | 04-09-2000 |
| | | BR 0010037 A | 22-01-2002 |
| | | CA 2362919 A1 | 24-08-2000 |
| | | DE 60010235 D1 | 03-06-2004 |
| | | EP 1153094 A1 | 14-11-2001 |
| | | WO 0049100 A1 | 24-08-2000 |

EPO FORM P0459

For more details about this annex : see Official Journal of the European Patent Office, No. 12/82